**Europäisches Patentamt**

(19) **European Patent Office**

**Office européen des brevets**

(11) Veröffentlichungsnummer: **0 081 144 B1**

(12) **EUROPÄISCHE PATENTSCHRIFT**

(45) Veröffentlichungstag der Patentschrift:
**27.08.86**

(51) Int. Cl.⁴: **C 08 J 5/04,** C 08 J 5/18 //
(C08J5/04, C08L67:02)

(21) Anmeldenummer: **82110862.8**

(22) Anmeldetag: **24.11.82**

(54) **Warmverformbares flächiges Halbzeug aus faserverstärktem Polyethylenterephthalat.**

(30) Priorität: **03.12.81 DE 3147881**

(43) Veröffentlichungstag der Anmeldung:
**15.06.83 Patentblatt 83/24**

(45) Bekanntmachung des Hinweises auf die Patenterteilung:
**27.08.86 Patentblatt 86/35**

(84) Benannte Vertragsstaaten:
**CH DE FR GB IT LI**

(56) Entgegenhaltungen:
**EP - A - 0 029 931**
**EP - A - 0 055 687**
**FR - A - 2 138 005**
**US - A - 4 146 528**
**US - A - 4 223 125**

(73) Patentinhaber: **BASF Aktiengesellschaft,
Carl-Bosch-Strasse 38, D-6700 Ludwigshafen (DE)**

(72) Erfinder: **Seiler, Erhard, Dr., Erpolzheimer Strasse 1,
D-6700 Ludwigshafen (DE)**
Erfinder: **Welz, Martin, Kaiserslauterer Strasse 231,
D-6702 Bad Duerkheim (DE)**
Erfinder: **Steinberger, Rolf, Dr., Laurentiusstrasse 20,
D-6707 Schifferstadt (DE)**

## Beschreibung

Halbzeug aus faserverstärktem, insbesondere glasmattenverstärktem Polyethylenterephthalat (PETP) ist bekannt. Dieses flächige Halbzeug kann z.B. nach der DE-A 2 200 594 zu Formteilen verarbeitet werden, indem man es auf eine Temperatur oberhalb des Erweichungspunktes des PETP vorerhitzt, in eine Form einbringt, dort verpresst und unter Formdruck abkühlen lässt. Nach der DE-A 2 200 594 wird die Verarbeitung vorzugsweise in feuchter Atmosphäre durchgeführt, wodurch ein hydrolytischer Abbau des Polyesters stattfindet, der die Kristallisation des PETP beim Abkühlen beschleunigen soll. Es ist aber sehr schwierig, diesen Abbau zu kontrollieren, da die Feuchtigkeit nicht ohne weiteres definiert eingestellt werden kann und stark von der Lagerzeit und Umgebungsfeuchtigkeit abhängt. Aber auch wenn man von vornherein niedermolekulares PETP einsetzt, ist die Kristallisationsgeschwindigkeit so langsam, dass das PETP noch amorphe Anteile enthält, die im Fertigteil nachkristallisieren, was ein Schrumpfen und Verziehen der Teile zur Folge hat, und insbesondere deren Wärmeformbeständigkeit herabsetzt. Ausserdem lässt die Stabilität der Formteile gegen thermischen und oxidativen Abbau zu wünschen übrig.

Aus der EP-A-29 231 sind Spritzgussmassen auf der Basis von Polyethylenterephthalat und kurzen Glasfasern bekannt, die zusätzlich Schlagzähmodifizierungsmittel sowie ein Nucleierungsmittel enthalten.

In der älteren Patentanmeldung EP-A-55 687 sind Polyethylenterephthalat-Formmassen mit einem Nucleierungsmittel beansprucht, die darüber hinaus einen Weichmacher, ein Schlagzähmodifizierungsmittel und als Füllstoffe u.a. Glasfasern enthalten können.

Der Erfindung lag die Aufgabe zugrunde, ein warmverformbares, flächiges Halbzeug auf Basis von faserverstärktem PETP zu entwicklen, das bei der Verarbeitung sehr schnell kristallisiert, und das zu Fertigteilen mit hoher Schlagzähigkeit und Wärmeformbständigkeit verarbeitet werden kann, die ausserdem gegen thermischen und oxidativen Abbau genügend stabil sind.

Es wurde gefunden, dass diese Aufgabe gelöst werden kann, wenn man PETP lange Glasfasern, Nucleierungsmittel, Verarbeitungsstabilisatoren, Weichmacher, Schlagzähmodifizierungsmittel sowie gegebenenfalls Füllstoffe in solchen Mengen zumischt, dass das entstehende Halbzeug folgende Eigenschaften aufweist:

a) die Abnahme der K-Werts bei der Verarbeitung des Halbzeugs (durch Aufheizen mittels IR-Bestrahlung auf 280 °C innerhalb von 45 sec pro mm Halbzeugdicke und Abkühlen in einer 80 °C heissen Form innerhalb von 10 sec pro mm Halbzeugdicke) ist geringer als 3 Einheiten;

b) bei der unter a) definierten Verarbeitung kristallisiert der Polyester so schnell, dass bei der Bestimmung der exothermen Nach-Kristallisationsenthalpie an einer Probe des abgekühlten Formteils bei einer Aufheizgeschwindigkeit von 30 °C/min im DSC-Diagramm sich eine Nachkristallisations-Peakfläche (im Temperaturbereich zwischen 120 und 170 °C) ergibt, die nicht mehr als 10% der Peakfläche ausmacht, die sich bei der Bestimmung der endothermen Gesamtkristallisationsenthalpie ergibt (Schmelzpeak);

c) die Schlagzähigkeit (nach DIN 53 453) eines nach a) hergestellten Formteils beträgt bei Raumtemperatur mindestens 25 kJ $\cdot$ m$^{-2}$, und bei $-40$ °C ist sie mindestens 1 kJ $\cdot$ m$^{-2}$ höher als bei Raumtemperatur;

d) die Wärmeformbeständigkeit (nach ISO 75 B) eines nach a) hergestellten Formteils ist höher als 240 °C.

Die genannten Zusatzstoffe sind zwar jeder für sich als Mittel zur Modifizierung der Eigenschaften von PETP bekannt und üblich. Ihre Kombination sowie die Herstellung eines flächigen Halbzeugs aus einem derart modifizierten PETP ist jedoch neu. Wesentlich ist, dass die Zusatzstoffe in ihrer Art und Menge so ausgewählt werden, dass das entstehende Halbzeug die angegebenen Eigenschaften aufweist. Die folgende Beschreibung enthält Hinweise für das Vorgehen bei dieser Auswahl:

A. Als PETP wird vorzugsweise das Polykondensationsprodukt von Terephthalsäure und Ethandiol verwendet. Es kann aber auch eine Mischung dieses Polykondensationsproduktes mit bis zu 40 Gew.% anderer Polymerer, die damit voll oder wenigstens teilweise verträglich sind, eingesetzt werden, z.B. Copolyester mit anderen Dicarbonsäuren bzw. Diolen, Polybutylenterephthalat, Polyneopentylglykolterephthalat oder Polycarbonat. Das PETP weist einen K-Wert von mindestens 45 auf, vorzugsweise soll er zwischen 50 und 60 liegen. Setzt man PETP mit K-Werten unter 45 ein, so werden Formteile mit ungenügenden mechanischen Eigenschaften erhalten, bei zu hohen K-Werten wird die Kristallisation so langsam, dass sehr grosse Mengen an Kristallisationsbeschleuniger zugesetzt werden müssen.

B. Es werden Glasfasern mit einer mittleren Faserlänge von mindestens 25 mm, vorzugsweise mehr als 40 mm, in Mengen von 10 bis 50, vorzugsweise 20 bis 40 Gew.%, in Form von zusammenhängenden Flächengebilden, insbesondere in Form von gebundenen Matten verwendet. Die Matten können aus wirr verlegten Endlosfasern, aus geschnittenen Fasern in ungerichteter Verteilung oder ganz bzw. teilweise aus gerichteten endlosen oder geschnittenen Fasern gebildet sein. Bevorzugt sind Glasfasermatten aus endlosen ungerichteten Glasfasern mit einem Flächengewicht von 250 bis 1200 g $\cdot$ m$^{-2}$. Die Verfestigung der Matten kann mittels polymerer Bindemittel oder durch mechanische Verbindungstechniken, z.B. Nadeln, Vernähen oder Versteppen erfolgt sein.

C. Die Nucleierungsmittel sind sehr feinteilige feste Stoffe, die bei Temperaturen unter 300 °C, d.h. bei der Verarbeitungstemperatur des PETP weder schmelzen noch sich zersetzen. Sie verhindern eine Unterkühlung der Polymerschmelze und initiieren so die Kristallisation des PETP. Sie sind umso wirksamer, je feinteiliger sie sind. Bereits in sehr geringen Konzentrationen von 0,01 Gew.% können sie wirksam werden. Mit steigender Konzentration bis etwa 3 Gew.% nimmt ihre Wirksamkeit zu. Bei Konzentrationen oberhalb von 3 Gew.% nehmen die Nucleierungsmittel den Charakter von Füllstoffen an, wobei dann auch die mechanischen Eigenschaften des Formteils beeinflusst werden: die Steifigkeit steigt, die Zähigkeit fällt, der lineare thermische Ausehnungskoeffizient wird verringert.

Bevorzugte Nucleierungsmittel sind anorganische Stoffe mit einer mittleren Teilchengrösse unter 10 µm, vorzugsweise unter 1 µm, z.B. Talkum, Kaolin, Kreide, Russ, Graphit, Quarzmehl (®Aerosil) sowie anorganische Pigmente. Auch feinteilige organische Verbindungen, die bei Verarbeitungstemperaturen nicht schmelzen, können als Nucleierungsmittel wirken, z.B. Stärke oder bestimmte Flammschutzmittel. Die Nucleierungsmittel werden bevorzugt in Mengen von 0,05 bis 2 Gew.% eingesetzt.

D. Die Weichmacher erhöhen die Kettenbeweglichkeit des Polyesters, so dass dieser beim Erstarren schneller zu einer kristallisierfähigen Nahordnung findet. Die Kristallisation kann somit noch während des Abkühlvorgangs abgeschlossen werden, und es erfolgt kein Einfrieren von prinzipiell kristallisierfähigen Segmenten. Vorzugsweise sollten die kristallisationsbeschleunigenden Weichmacher eine tiefere Glastemperatur als das PETP haben. In Frage kommen insbesondere organische Verbindungen mit einem Schmelzpunkt zwischen − 10 und + 60 °C, die in PETP löslich sind. Bevorzugt sind Ester aromatischer Dicarbonsäuren mit Methoxypolyethylenglykol mit 1 bis 3 Glykoleinheiten, sowie Ester der Benzoesäure, Terephthalsäure oder o-Phthalsäure mit Neopentylglykol oder Polyethylenglykolen mit 1 bis 15 Glykoleinheiten. Daneben sind auch andere organische Ester aliphatischer oder aromatischer Mono- oder Dicarbonsäuren, sowie Ketone, Nitrile, Sulfone, Sulfoxide, Säureamide, ferner salzartige organische Verbindungen, z.B. Salze von langkettigen Carbonsäuren, geeignet.

Da die Weichmacher meist die mechanischen Eigenschaften, vor allem die Schlagzähigkeit verschlechtern, und zu Formbelag und Ausschwitzen auf den Fertigteilen führen können, muss eine Überdosierung vermieden werden. Die Mengen sollten 10 Gew.% der Gesamtrezeptur nicht überschreiten, bevorzugt werden 3 bis 8 Gew.% eingesetzt.

E. Die Verarbeitungsstabilisatoren wirken stabilisierend auf das Molekulargewicht des PETP, indem sie − wahrscheinlich durch Kettenverknüpfung − dem thermischen und oxidativen Abbau entgegenwirken. Sie ermöglichen eine Verarbeitung des Halbzeugs bei hohen Temperaturen, auch bei gleichzeitiger Anwesenheit von Feuchtigkeit. Sie werden in Mengen von 0,3 bis 5, vorzugsweise von 0,5 bis 3 Gew.% eingesetzt. Eine zu hohe Konzentration muss vermieden werden, da sonst der Polyester vernetzen kann.

Als Stabilisatoren kommen in Betracht: Epoxidverbindungen mit zwei oder mehr Epoxidgruppen im Molekül, z.B. epoxidierte Pflanzenöle wie Sojaöl oder Leinöl, sowie Umsetzungsprodukte von Bisphenol A und Epichlorhydrin, die mit Beschleunigern kombiniert werden können, wie z.B. Aminen, organischen Ammoniumhalogeniden und -hydroxiden, Phosphoniumhalogeniden oder Metallchelatkomplexen; Kohlensäureester, wie z.B. Diphenylcarbonat; Tetracarbonsäuredianhydride, wie z.B. Pyromellithsäuredianhydrid; ferner Propylenharnstoff, sowie Mischungen von zwei oder mehreren dieser Verbindungen. Besonders bevorzugt sind Halbzeuge, die eine Stabilisatormischung enthalten aus:

0,1 bis 0,5 Gew.% Pyromellithsäuredianhydrid,
0,5 bis 2,0 Gew.% Kohlensäurediphenylester und
0,2 bis 1,0 Gew.% Diglycidylether des Bisphenol A oder epoxidierte Pflanzenöle

F. Als Schlagzähmodifizierungsmittel können 0 bis 10, vorzugsweise 1 bis 5 Gew.% kautschukartiger Polymerer mit einer Glastemperatur unterhalb von − 25 °C, vorzugsweise unterhalb von − 40 °C, verwendet werden. Obwohl die kristallisationsbeschleunigenden Weichmacher D bei richtiger Dosierung die Schlagfestigkeit des glasmattenverstärkten PETP dadurch erhöhen können, dass eingefrorene Spannungen aufgrund unterschiedlichen Kristallisationsgrades innerhalb des Formteils gar nicht erst entstehen, kann dennoch eine weitere Erhöhung der Schlagfestigkeit bei vielen Anwendungen nützlich sein. Bei der Schlagzähmodifizierung ist darauf zu achten, dass Steifigkeit und Wärmeformbständigkeit möglichst wenig absinken. Daher ist es wenig sinnvoll, Schlagzähmodifizierungsmittel in Mengen von mehr als 10 Gew.% einzusetzen.

Als Schlagzähmodifizierungsmittel sind geeignet: Ethylen/Acrylat- oder Methacrylat-Copolymere, vorzugsweise mit eingebauten ungesättigten Monocarbonsäuren, z.B. Ethylen/Butylacrylat/Acrylsäure-Terpolymere; lineare oder sternförmig aufgebaute Blockcopolymere aus Vinylaromaten und Dienen, die gegebenenfalls hydriert sein können, z.B. Styrol/Butadien/Styrol-Blockcopolymere oder Styrol/Ethylen/Buten-1/Styrol-Blockcopolymere; Pfropfcopolymere aus Styrol und Acrylnitril auf Polybutadien oder auf Polyacrylate, wie Polybutylacrylat; Ethylen/Propylen-Kautschuke, die zusätzlich noch mit Dienen, wie z.B. Ethylennorbonen oder mit carboxylgruppenhaltigen Comonomeren modifiziert sein können; carboxylgruppenhaltiges Polypropylen, das z.B. durch Pfropfen mit Acrylsäure oder Maleinsäureanhydrid hergestellt wurde.

G. Als Füllstoffe geeignet sind alle üblichen feinteiligen anorganischen Füllstoffe, die durch die langen Glasfasern nicht an ihrer homogenen Verteilung im Verbundwerkstoff stark behindert werden. Sie verbessern zusätzlich die Steifigkeit, senken den thermischen Ausdehnungskoeffizienten noch weiter ab, senken aufgrund ihres vergleichsweise niedrigen Preises die Einsatzstoffkosten und verbessern häufig die Kratzfestigkeit der Fertigteiloberfläche.

Bevorzugt ist feinteiliges Talkum mit einer Teilchengrösse von 0,1 bis 10 µm. Geeignet sind ferner feinteilige Kreide (die vorzugsweise mit Stearinsäure beschichtet ist), Kaolin, calcinierter Kaolin, Quarzmehl, Glaskugeln, Glimmer, Wollastonit und Graphit. Die Füllstoffe können zur Verbesserung der Verbundhaftung und Verarbeitung mit Haftvermittlern, z.B. Silanen, und Schlichten beschichtet sein. Sie werden in Mengen von 3 bis 30, vorzugsweise 5 bis 20 Gew.% eingesetzt.

Ausser den genannten Zusatzstoffen können die erfindungsgemässen Halbzeuge natürlich noch die üblichen Antioxydantien auf Basis sterisch gehinderter Phenole, UV-Stabilisatoren, Antistatika, Flammschutzmittel, Farbstoffe und Pigmente enthalten.

Das erfindungsgemässe Halbzeug wird vorzugsweise kontinuierlich hergestellt (siehe z.B. DE-A-2 312 816) durch Zugabe der Zusatzstoffe C bis G zu dem aufgeschmolzenen PETP, z.B. in einem Extruder, Auspressen einer Bahn, z.B. aus einer Breitschlitzdüse, Zusammenführen dieser Bahn unter Druck mit dem vorzugsweise vorgeheizten flächigen Glasfasermaterial B, Kalibrieren des entstandenen Halbzeugs, Glätten und Abkühlen unter Druck. Das Halbzeug hat im allgemeinen eine Dicke von 0,5 bis 10, vorzugsweise von 1 bis 5 mm. Es kann geschnitten und – bei dünnem Material – aufgerollt werden.

Das Halbzeug ist durch seine Eigenschaften charakterisiert:

a) Die Abnahme des K-Werts bei der oben definierten Verarbeitung zu einem Formteil soll – auch bei hohem Feuchtigkeitsgehalt – weniger als 3, vorzugsweise weniger als 2 Einheiten betragen. Dies wird im wesentlichen durch die Art und Menge der Verarbeitungsstabilisatoren bewirkt. Ein zu starker K-Wert-Abbau hätte eine Verschlechterung der mechanischen Eigenschaften, insbesondere der Zähigkeit und Festigkeit zur Folge.

b) Das im Halbzeug enthaltene PETP soll bei der Verarbeitung möglichst rasch und vollständig kristallisieren. Werden kristallisierfähige Anteile amorph abgeschreckt (unterkühlt), so kristallisieren diese Anteile beim Aufheizen nach und ergeben aufgrund der freiwerdenden Kristallisationsenthalpie einen Peak im DSC-Diagramm. Die DSC (Differential-Scanning-Calorimetry)-Methode ist ausführlich beschrieben in IRS, Physical Chemistry Serie 2, 1975, Band 10, Verlag Butterworth, London, Autoren: J.L. McNaughton, C.T. Mortimer; ferner in der Monographie «Characterization and Quality Control of Engineering Plastics by Thermal Analysis» von W.P. Brennan in der Firmenschrift »Perkin Elmer Application Study 22 (August 1977). Diese Erscheinung macht sich die oben angegebene und in den Beispielen ausführlich beschriebene Messmethode zur Bestimmung der nachkristallisierenden Anteile zunutze. Kann bei der Verarbeitung des Halbzeugs der Polyester aufgrund wirksamer kristallisationsbeschleunigender Zusätze (Weichmacher) während des Abkühlvorganges voll durchkristallisieren, so wird im DSC-Diagramm kein Nachkristallisationspeak auftreten. Eine geringe Nachkristallisation kann toleriert werden. Der entsprechende Nachkristallisationspeak darf aber höchstens 10%, vorzugsweise weniger als 5% des bei der Bestimmung der Gesamtkristallisationsenthalpie gemessenen Schmelzpeaks betragen.

c) Die Schlagzähigkeit eines aus dem Halbzeug definiert hergestellten Formteils beträgt bei Raumtemperatur mindestens 25, vorzugsweise mehr als 30 $kJ \cdot m^{-2}$, bei $-40°C$ ist sie mindestens 1, vorzugsweise mehr als 2 $kJ \cdot m^{-2}$ höher als bei Raumtemperatur. Durch geeignete Wahl der Art und Menge der Zusatzstoffe wird im allgemeinen erreicht, dass diese Bedingung auch ohne Zugabe von Schlagzähmodifizierungsmittel F eingehalten wird, in manchen Fällen, insbesondere wenn verhältnismässig grosse Mengen Weichmacher D zugegeben werden müssen, kann dies allerdings notwendig werden.

d) Die Wärmeformbeständigkeit eines aus dem Halbzeug hergestellten Formteils ist höher als 240°C, vorzugsweise höher als 250°C. Dies wird vor allem durch die Zugabe des Nucleierungsmittels C bewirkt.

Das erfindungsgemässe Halbzeug kann in vorerhitztem Zustand mit verhältnismässig schnellen Zyklen in auf ca. 80°C angewärmten Formen verpresst werden. Es können daraus z.B. Automobilteile, Abdeckplatten, Behälter oder Möbelteile hergestellt werden.

Die in den Beispielen genannten Teile und Prozente beziehen sich auf das Gewicht.

Beschreibung der Messmethoden

1. Bestimmung der Nachkristallisation mit Hilfe der DSC-Methode

Messgeräte:

Alle kommerziell erhältlichen DSC-Geräte, z.B. von Perkin Elmer oder von Dupont sind geeignet. Für die Untersuchung der hier beschriebenen glasmattenverstärkten PETP-Proben wurde ein DSC-Gerät der Firma Perkin Elmer Typ DSC-2C verwendet.

Einwaage: ca. 7,5 mg

Aufheizzeit: 30°C/min.

Die Probe darf nicht vorgetempert werden, da sonst bereits eine Nachkristallisation ablaufen kann, die bei der eigentlichen Messung dann nicht mehr berücksichtigt werden kann.

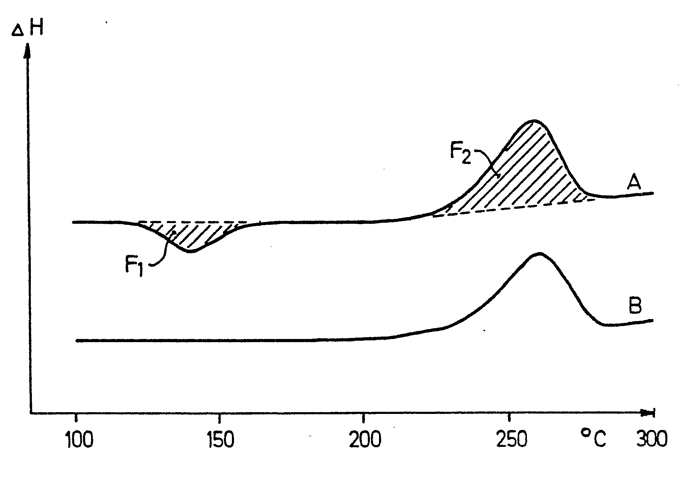

Zur Bestimmung des Anteils an Nachkristallisation ist lediglich die Aufnahme der Aufheizkurve notwendig. Die Figur zeigt den typischen Verlauf der DSC-Kurve für ein Material mit prohibitiv hohem Anteil an Nachkristallisation (Kurve A, nicht erfindungsgemäss) und für eine erfindungsgemäss hergestellte Probe (Kurve B), bei der keine messbare Nachkristallisation erfolgt.

Auswertung:

Die Bestimmung des Anteils an Nachkristallisation erfolgt sehr einfach und schnell durch Ausmessen der Flächen des Nachkristallisationspeaks $F_1$ und des Schmelzpeaks $F_2$.

Der Anteil der Nachkristallisation im Vergleich zur Gesamtkristallisation ( = Schmelzpeak) errechnet sich dann wie folgt:

$$\frac{\text{Fläche } F_1}{\text{Fläche } F_2} \cdot 100 = \% \text{ Nachkristallisation}$$

2. Bestimmung des K-Werts

Die Bestimmung des K-Werts nach Fikentscher erfolgt in einem Kapillarviskosimeter an 1%igen Lösungen des Polymeren (nach Abfiltrieren der unlöslichen Anteile an Glasfasern und Füllstoffen) in Phenol/o-Dichlorbenzol im Verhältnis 4:1 bei Raumtemperatur. Durchführung und Auswertung sind in DIN 53 727 ausführlich beschrieben. Die anorganischen unlöslichen Anteile werden getrennt durch Veraschen einer Probe ermittelt und sind bei der Einwaage für die Viskositätsmessung zu berücksichtigen.

3. Bestimmung der Schlagzähigkeit

Zur Bestimmung der Schlagzähigkeit $a_n$ [kJ/m²] werden Normkleinstäbe aus den Pressplatten ausgesägt. Die Probendicke wird zwischen 3 und 4 mm eingehalten und bei der Auswertung berücksichtigt. Durchführung und Auswertung erfolgt nach DIN 53 453

4. Bestimmung der Wärmeformbeständigkeit

Die Bestimmung der Wärmeformbeständigkeit erfolgt ebenfalls an ausgesägten Probekörpern nach ISO 75 B (geringe Last).

Vergleichsbeispiel (nicht erfindungsgemäss)

Trockenes Polyethylenterephthalat (Wassergehalt 0,04%, K-Wert nach Fikentscher (1%ig in Phenol/o-Dichlorbenzol 4:1 bei Raumtemperatur) = 52, entsprechend einem Molekulargewicht von ca. 17 500 ($M_n$) wurde unter Ausschluss von Feuchtigkeit in einem Einwellenextruder aufgeschmolzen und bei einer Massetemperatur von 285°C über eine Breitschlitzdüse extrudiert. Nach der in der DE-A-2 312 816 beschriebenen Verfahrensweise wurden vorgewärmte Glasmatten in die Polymerschmelze eingedrückt und der Verbund nach Kalibrierung und Glättung unter Druck kontinuierlich abgekühlt.

Die Mengen an Polyethylenterephthalat und Glasfasermatten wurden so eingestellt, dass eine Verbundplatte von 3 mm Dicke resultiert, die einen Glasgehalt von ca. 30 Gew.% aufweist.

Es erwies sich als notwendig, die Abkühlung in der kontinuierlichen Druckzone lediglich bis auf 140°C vorzunehmen, da bei stärkerer Abkühlung ein erheblicher Anteil des PETP nicht durchkristallisiert und amorph abgeschreckt wurde; bei einer stärkeren Abkühlung auf 80°C machte sich der unterschiedliche Kristallinitätsgrad der Platte zwischen dem noch heissen Zentrum und der bereits kalten Oberfläche in einem deutlichen Knistern bemerkbar.

Die mechanischen Eigenschaften des Halbzeugs sind in Tabelle 1 zusammengefasst. Der K-Wert an der Halbzeugplatte beträgt 46 ($M_n = 13\,500$).

Zur Herstellung eines Formteils wurde ein Plattenzuschnitt in einem Umlufttrockenschrank innerhalb von 3 min auf ca. 285°C aufgeheizt und in ein auf 80°C temperiertes, in einer geöffneten hydraulischen Presse eingebautes zweiteiliges Schalenwerkzeug eingelegt. Die Pressform wurde durch Zufahren des Pressenoberstempels geschlossen und über 30 sec mit einem Druck von 35 bar beaufschlagt. Anschliessend wurde die Form geöffnet und das Formteil entnommen.

Mit Hilfe der DSC-Methode wurde, wie beschrieben, der Anteil an eingefrorenen amorphen Anteilen ermittelt. Er betrug 25% und ist damit unvertretbar hoch. Zur Ermittlung des Einflusses der unterkühlten amorphen Anteile auf die Fertigteilgeometrie wurde das Formteil 1 Stunde bei 140°C im Wärmeschrank getempert. Die ursprüngliche glatte glänzende Oberfläche des Formteils war danach wellig und rauh, das Teil zeigte starken Verzug. Für die Bestimmung der mechanischen Eigenschaften nach der Verarbeitung zum Fertigteil wurde ein Plattenzuschnitt wie oben beschrieben aufgeheizt und in ein ebenes Plattenwerkzeug von 3 mm Dicke eingelegt und 30 sec bei 80°C Formtemperatur und einem Druck von 35 bar verpresst.

In Tabelle 1 sind die mechanischen Eigenschaften und der K-Wert zusammengestellt. Schlagzähigkeit und K-Wert sind gegenüber dem Halbzeug noch weiter abgefallen.

Tabelle 1 (Vergleichsbeispiel)

|  | Einheit | DIN-Norm | Halbzeug | Fertigteil |
|---|---|---|---|---|
| Reissfestigkeit | N/mm² | 53455 | 48 | 41 |
| Reissdehnung | % | 53455 | 2,5 | 2,3 |
| Zug E-modul | N/mm² | 53455 | 6000 | 5600 |
| Schlagzähigkeit |  | 53453 |  |  |
| +25°C | kJ/m² |  | 23 | 18 |
| −40°C | kJ/m² |  | 28 | 21 |
| Wärmeformbeständigkeit | °C | ISO 75 B | >250 | >250 |
| Brucharbeit ($W_{50}$) | Nm | 53443/1 | 2,9 | 2,2 |
| Glührückstand | % | — | 28,5 | 28,5 |
| K-Wert |  | 53727 | 46 | 41 |
| Nachkristallisation | % | — | 10(140°C)[+] <br> 32( 80°C)[+] | 25 |

[+] Temperatur der Kühlzone beim Abkühlen des Halbzeugs

Beispiel (erfindungsgemäss)

Rezeptur des modifizierten schnell kristallisierenden Polyethylenterephthalats:

61 Gew.-Teile Polyethylenterephthalat, K-Wert 51 ($M_n$ = 17 000)

2 Gew.-Teile feinteiliges Talkum (Talkum IT extra der Fa. Erbslöh, Norwegian Talc) als festes Nucleierungsmittel

5 Gew.-Teile Ethylen/n-Butylacrylat/Acrylsäure-Terpolymeres (Zusammensetzung 77% Ethylen, 17% Butylacrylat, 6% Acrylsäure) als Schlagzähmodifizierungsmittel

0,25 Gew.-Teil Pyromellithsäuredianhydrid

1 Gew.-Teil Diphenylcarbonat

0,75 Gew.-Teil epoxidiertes Sojabohnenöl (Edenol D 82 von Fa. Henkel) als Verarbeitungsstabilisatoren

30 Gew.-Teile Glasmatten aus wirr verlegten Endlosglasfasern (Flächengewicht 600 g/m²; 2 Matten ergeben bei ca. 3 mm Plattendicke den gewünschten Glasgehalt). Die Matten sind mit einem Binder aus vernetztem ungesättigtem Polyesterharz verfestigt (Bindergehalt 4%).

Die festen Rezepturbestandteile (PETP-Granulat, Talkum, Schlagzähmodifizierungsmittel als Granulat, Pyromellithsäuredianhydrid und Diphenylcarbonat) wurden in einem Schnellmischer vorgemischt und anschliessend in einen Zweiwellenextruder vom Typ ZSK 53 (Fa. Werner und Pfleiderer) dosiert. Die ebenfalls vorgemischten flüssigen Bestandteile (Dimethylglykolphthalat und epoxidiertes Sojabohnenöl) werden mittels einer Spinpumpe in den Extruder eingedrückt und zwar an der Stelle, an der das Polymere bereits aufgeschmolzen vorlag. Durch intensives Kneten und Mischen der Schneckenelemente wurde eine homogene Mischung aller Komponenten bewirkt. Gehäusetemperatur und Schneckendrehzahl wurden so eingestellt, dass die den Extruder verlassende Polymerschmelze am Ausgang der Breitschlitzdüse eine Massetemperatur von ca. 285°C aufwies. Analog wie in DE-A-2 312 816 beschrieben, wurde die Schmelze in zwei vorgewärmte, ca. 150°C heisse Endlosglasfasermatten eingepresst. Der Verbund wurde durch Kalibrierung geglättet, auf eine Plattendicke von ca. 3 mm eingestellt und unter Druck abgekühlt, wobei die Kühlzone ohne Schwierigkeiten auf 80°C abgesenkt werden konnte.

Die am Halbzeug gemessenen mechanischen Eigenschaften sind in Tabelle 2 zusammengestellt.

Analog wie im Vergleichsbeispiel beschrieben wurde das Halbzeug aufgeheizt und in einer 80°C heissen Form verformt und abgekühlt. Das nach 30 sec entnommene Formteil zeigte weder Knistern noch veränderte es sich nach Lagerung über 3 Std. im Umluftschrank bei 140°C hinsichtlich Geometrie und Oberfläche.

Nach gleichen Bedingungen wurde ein ebenes Formteil hergestellt und zur Bestimmung der mechanischen Eigenschaften, des K-Werts und des Nachkristallisationsverhaltens verwendet. Die Ergebnisse sind in Tabelle 2 zusammengefasst. Der K-Wert bleibt weitgehend konstant, die Schlagzähigkeit zeigt ein hohes Niveau und im DSC-Diagramm ist kein Nachkristallisationspeak feststellbar (Nachweisgrenze 5% des Schmelzpeaks).

Tabelle 2 (erfindungsgemäss)

|  | Einheit | DIN-Norm | Halbzeug | Fertigteil |
|---|---|---|---|---|
| Reissfestigkeit | N/mm² | 53455 | 80 | 75 |
| Reissdehnung | % | 53455 | 3,4 | 3,2 |
| Zug E-modul | N/mm² | 53455 | 5200 | 5000 |
| Schlagzähigkeit |  | 53453 |  |  |
| +25°C | kJ/m² |  | 35 | 37 |
| −40°C | kJ/m² |  | 43 | 46 |
| Wärmeformbeständigkeit | °C | ISO 75 B | 250 | 250 |
| Brucharbeit ($W_{50}$) | Nm | 53443/1 | 6,5 | 6,9 |
| Glührückstand | % | – | 27,5 | 27,5 |
| K-Wert |  | 53727 | 51,7 | 52,0 |
| Nachkristallisation | % | – | <5%(80°C) | <5% |

**Patentansprüche**

1. Warmverformbares, flächiges Halbzeug auf Basis eines faserverstärkten thermoplastischen Kunststoffs, dadurch gekennzeichnet, dass es

A. mehr als 40 Gew.% Polyethylenterephthalat mit einem K-Wert (nach DIN 53 726) von mindestens 45,

B. 10 bis 50 Gew.% Glasfasern einer mittleren Länge von mindestens 25 mm in Form eines zusammenhängenden Flächengebildes,

C. 0,01 bis 3 Gew.% üblicher Nucleierungsmittel,

D. 2 bis 10 Gew.% üblicher Weichmacher,

E. 0,3 bis 5 Gew.% üblicher Verarbeitungsstabilisatoren,

F. 0 bis 10 Gew.% üblicher Schlagzähmodifizierungsmittel, sowie gegebenenfalls

G. 3 bis 30 Gew.% üblicher anorganischer Füllstoffe enthält, wobei

a) die Abnahme des K-Werts bei der Verarbeitung des Halbzeugs (durch Aufheizen mittels IR-Bestrahlung auf 280°C innerhalb von 45 sec pro mm Halbzeugdicke und Abkühlen in einer 80°C heissen Form innerhalb von 10 sec pro mm Halbzeugdicke) geringer ist als 3 Einheiten;

b) bei der unter a) definierten Verarbeitung der Polyester so schnell kristallisiert, dass bei der Bestimmung der exothermen Nachkristallisationsenthalpie an einer Probe des abgekühlten Formteils bei einer Aufheizgeschwindigkeit von 30°C/min im DSC-Diagramm sich eine Nachkristallisation-Peakfläche (im Temperaturbereich zwischen 120 und 170°C) ergibt, die nicht mehr als 10% der Peakfläche ausmacht, die sich bei der Bestimmung der endothermen Gesamtkristallisationsenthalpie (Schmelzpeak) ergibt;

c) die Schlagzähigkeit (nach DIN 53 453) eines nach a) hergestellten Formteils bei Raumtemperatur mindestens $25 \, kJ \cdot m^{-2}$ beträgt, und bei −40°C mindestens $1 \, kJ \cdot m^{-2}$ höher ist als bei Raumtemperatur;

d) die Wärmeformbeständigkeit (nach ISO 75 B) eines nach a) hergestellten Formteils höher ist als 240°C.

2. Halbzeug nach Anspruch 1, dadurch gekennzeichnet, dass die Glasfasern B in Form von gebundenen Matten vorliegen.

3. Halbzeug nach Anspruch 1, dadurch gekennzeichnet, dass die Nucleierungsmittel C feste anorganische Stoffe mit einer Teilchengrösse unter 10 μm sind, die bei Temperaturen unter 300°C weder schmelzen noch sich zersetzen.

4. Halbzeug nach Anspruch 1, dadurch gekennzeichnet, dass die Weichmacher D in Polyethylenterephthalat lösliche organische Ester mit einem Schmelzpunkt zwischen −10°C und +60°C sind.

5. Halbzeug nach Anspruch 1, dadurch gekennzeichnet, dass die Verarbeitungsstabilisatoren E Epoxidverbindungen, Kohlensäureester, Tetracarbonsäuredianhydride, Propylenharnstoff oder Mischungen von zwei oder mehreren dieser Verbindungen sind.

6. Halbzeug nach Anspruch 1, dadurch gekennzeichnet, dass die Schlagzähmodifizierungsmittel F kautschukartige Polymere mit einer Glastemperatur unterhalb von −25°C sind.

7. Halbzeug nach Anspruch 1, dadurch gekennzeichnet, dass die anorganischen Füllstoffe G Talkum, Kaolin oder Kreide sind.

## Claims

1. A thermally deformable, sheet-like semimanufactured product based on a fibre-reinforced thermoplastic, characterized in that it contains

A. more than 40% by weight of polyethylene terephthalate having a K value (according to DIN 53,726) of at least 45,

B. 10 to 50% by weight of glass fibres having a mean length of at least 25 mm in the form of a coherent sheet-like structure,

C. 0.01 to 3% by weight of conventional nucleating agents,

D. 2 to 10% by weight of conventional plasticizers,

E. 0.3 to 5% by weight of conventional processing stabilizers, and

F. 0 to 10% by weight of conventioanl impact modifiers, with or without

G. 3 to 30% by weight of conventional inorganic fillers,

(a) the decrease in the K value during processing of the semi-manufactured product (by heating, by means of IR radiation, to 280°C in the course of 45 seconds per mm of thickness of the semi-manufacture, and cooling in a mould, heated to 80°C, in the course of 10 seconds per mm of thickness of the semi-manufacture) being less than 3 units;

(b) the polyester crystallizing so rapidly during processing defined under (a) that, during the determination of the exothermic aftercrystallization enthalpy on a sample of the cooled moulding at a heating-up rate of 30°C/min. an aftercrystallization peak area (in the temperature range between 120 and 170°C) is produced in the DSC diagram, which peak area does not account for more than 10% of the peak area produced during the determination of the total endothermic crystallization enthalpy (melt peak);

(c) the impact strength (according to DIN 53,453) of a moulding produced according to (a) being at least $25 \, kJ \cdot m^2$ at room temperature, and at least $1 \, kJ \cdot m^{-2}$ higher at −40°C than at room temperature; and

(d) the deflection temperature under flexural load (according to ISO 75 B) of a moulding produced according to (a) being above 240°C.

2. A semimanufactured product as claimed in claim 1, characterized in that the glass fibres B are in the form of bonded mats.

3. A semi-manufactured product as claimed in claim 1, characterized in that the nucleating agents C are solid inorganic substances which have a particle size of less than 10 μm and do not melt or decompose at temperatures below 300°C.

4. A semi-manufactured product as claimed in claim 1, characterized in that the palsticizers D are organic esters which are soluble in poylethylene terephthalate and have a melting point of from −10°C to +60°C.

5. A semi-manufactured product as claimed in claim 1, characterized in that the processing stabilizers E are epoxy compounds, carbonic esters, tetracarboxylic dianhydrides, propylene urea or mixtures of two or more of these compounds.

6. A semi-manufactured product as claimed in claim 1, characterized in that the impact modifiers are elastomeric polymers having a glass transition temperature of less than −25°C.

7. A semi-manufactured product as claimed in claim 1, characterized in that the inorganic fillers G are talc, kaolin and chalk.

## Revendications

1. Demi-produit plat, formable à chaud, à base d'une matière synthétique thermoplastique renforcée par des fibres, caractérisé par le fait qu'il contient

A. plus de 40% en poids de poly(téréphtalate d'éthylène) d'un indice K (selon DIN 53 726) d'au moins 45,

B. 10 à 50% en poids de fibres de verre d'une longueur moyenne d'au moins 25 mm sous forme d'un ensemble plat cohérent,

C. 0,01 à 3% en poids d'agents de nucléation usuels

D. 2 à 10% en poids de plastifiants usuels

E. 0,3 à 5% en poids de stabilisants de formage usuels

F. 0 à 10% en poids d'agents usuels de modification de la résilience sur barreau lisse

ainsi qu'éventuellement

G. 3 à 30% en poids de charges inorganiques usuelles, et qu'il possède les propriétés suivantes:

a) la diminution de l'indice K, par traitement du demi-produit (par chauffage au moyen de radiation IR à 280 °C en l'espace de 45s par mm d'épaisseur du demi-produit et refroidissement dans un moule chauffé à 80 °C en l'espace de 10s par mm d'épaisseur de demi-produit) est inférieure à 3 unités,

b) par le traitement défini sous a), le polyester cristallise si vite que, lors de la détermination de l'enthalgie de post-cristallisation exotherme, sur un échantillon de la pièce moulée refroidie, pour une vitesse de réchauffage de 30 °C/min, apparaît, sur le diagramme DSC, une surface de crête de post-cristallisation (dans la zone de température comprise entre 120 et 170 °C) qui ne représente pas plus de 10% de la surface de crête apparaissant lors de la détermination de l'enthalgie de cirstallisation totale endotherme (crête de fusion)

c) la résilience sur barreau lisse (selon DIN 53 453) d'une pièce moulée préparée selon a) s'élève, à la température ordinaire, à au moins 25 kJ · m$^{-2}$ et, à − 40 °C, est d'au moins 1 kJ · m$^{-2}$ de plus qu'à la température ordinaire.

d) la stabilité dimensionnelle à chaud (selon ISO 75 B) d'une pièce moulée préparée selon a) est supérieure à 240 °C.

2. Demi-produit selon la revendication 1, caractérisé par le fait que les fibres de verre B se présentent sous forme de mats à fibres liées.

3. Demi-produit selon la revendication 1, caractérisé par le fait que les agents de nucléation C sont des matières inorganiques solides d'une grosseur de particules inférieure à 10 µm et qui, à des températures inférieures à 300 °C, ou bien fondent ou sont détruites.

4. Demi-produit selon la revendication 1, caractérisé par le fait que les plastifiants D sont des esters solubles dans le poly(téréphtalate d'éthylène) et d'un point de fusion compris entre − 10 °C et + 60 °C.

5. Demi-produit selon la revendication 1, caractérisé par le fait que les stabilisants de formage E sont des composés époxy, des esters carboniques, des dianhydrides tétracarboniques, des propylènurées ou des mélanges de deux ou de plus de deux de ces composés.

6. Demi-produit selon la revendication 1, caractérisé par le fait que les agents de modification de la résilience F sont des polymères caoutchouteux d'une température de transition vitreuse inférieure à − 25 °C.

7. Demi-produit selon la revendication 1, caractérisé par le fait que les charges inorganiques G sont le talc, le kaolin ou la craie.